# FASCICULE DE BREVET EUROPEEN

(11) **EP 3 102 307 B1**
(45) Date de publication et mention de la délivrance du brevet: **20.12.2017**
(21) Numéro de dépôt: 15701829.2
(22) Date de dépôt: 12.01.2015
(51) Int. Cl.: B01D 53/00, B01D 53/34, B01D 53/50, B01D 53/60

(54) **DISPOSITIF ET PROCÉDÉ D'EXTRACTION D'UN COMPOSÉ CHIMIQUE DANS DES GAZ ACIDES**
VORRICHTUNG UND VERFAHREN ZUR EXTRAKTION EINER CHEMISCHEN VERBINDUNG IN SAUREN GASEN
DEVICE AND PROCESS FOR EXTRACTION OF A CHEMICAL COMPOUND IN ACID GASES

(30) Priorité: 05.02.2014 FR 1450893
(43) Date de publication de la demande: 14.12.2016
(73) Titulaire: EREIE - Energy Research Innovation Engineering, 91120 Palaiseau (FR)
(72) Inventeur: CLODIC, Denis, 91120 Palaiseau (FR); MAARAOUI, Samer, 91120 Palaiseau (FR)
(74) Mandataire: Dejade & Biset
(86) Numéro de dépôt international: PCT/FR2015/050054
(87) Numéro de publication internationale: WO 2015/118238

(56) Documents cités:
- DE-A1- 3 733 319
- DE-A1-102010 002 768
- FR-A1- 2 218 928
- US-A1- 2009 148 371

## Description

L'invention a trait au traitement des gaz acides industriels avec recyclage des condensats et recyclage thermique.

Ces gaz industriels sont issus des combustions de combustibles solides comme le charbon, le lignite ou les déchets ménagers. Mais également de combustibles liquides comme les différents types de fioul et les combustibles gazeux comme le gaz naturel ou le biogaz. On retrouve aussi les combustions issues des gaz de pétrole liquéfiés comme le butane ou le propane ainsi que des fumées mélangeant des fumées de combustions et des gaz acides provenant de réactions de transformations de produits solides des industries minérales comme le verre, le ciment, les tuiles et les briques.

La dépollution des gaz acides contenant des Oxydes d'Azote (NOₓ) et des Oxydes de Soufre (SOₓ) est connue. En effet, la législation impose des quotas d'émission de NOₓ et SOₓ car ceux-ci ont un impact connu sur l'environnement et sur la santé.

Par exemple les NOₓ contribuent à l'effet de serre et sont éminemment toxiques pour l'homme puisqu'ils pénètrent dans les poumons, irritent les bronches et réduisent le pouvoir oxygénateur du sang.

Les SOₓ, notamment le trioxyde de soufre, sont des polluants majeurs de l'atmosphère responsables des pluies acides. Dans l'atmosphère, les dioxyde et trioxyde de soufre réagissent avec l'eau et l'hydrogène pour former de l'acide nitreux (HNO₂) et de l'acide sulfureux (H₂SO₃). Ces pluies acides entravent notamment le développement normal des espèces et des végétaux en acidifiant les sols, les eaux en surface ainsi que les mers et les océans.

C'est la raison pour laquelle leurs émissions dans l'atmosphère est indésirable. Il existe aussi d'autres espèces de gaz acides, comme l'acide fluorhydrique ou le chlorure d'hydrogène, et qui présentent une toxicité importante pour l'homme.

Au regard des dégâts que peuvent causer toutes ces substances acides, la dépollution des gaz est une nécessité.

Des machines de dépollution existent. Elles permettent à l'aide de réactions chimiques et de différences de températures d'extraire les gaz acides. C'est notamment le but visé dans le brevet américain n° 5,030,428 (METALLGESELLSCHAFT AG). Dans ce document, il s'agit d'extraire les NOₓ et le SO₂ d'un gaz. Le dispositif comprend une tour constituée d'une série de compartiments étanches les uns vis-à-vis des autres. Les gaz entrent dans un premier compartiment où de l'acide sulfurique est pulvérisé, cette première étape servant à retirer la poussière des gaz. Les gaz sont, ensuite, acheminés en dehors de la tour pour être chauffés dans un échangeur thermique après quoi ils sont mélangés à de l'ammoniac dans un mélangeur afin de former de l'azote (N₂) et de l'eau (H₂O). Les gaz dépourvus de NOₓ sont ensuite chauffés à nouveau et le SO₂ est oxydé pour devenir du SO₃ après quoi le gaz contenant le SO₃ est refroidi à une température supérieure au point de rosée de l'acide sulfurique puis acheminé vers la tour dans un deuxième compartiment. Dans ce deuxième compartiment, de l'acide sulfurique dilué est vaporisé et le SO₃ dans les gaz se condense. Le gaz rejoint, ensuite, un troisième compartiment de la tour où une solution aqueuse est pulvérisée afin de retirer des particules fines.

Le dispositif présenté ci-dessus est un gouffre d'énergie. Les gaz sont chauffés puis refroidis à plusieurs reprises pour atteindre les conditions idéales d'oxydation/réduction des éléments chimiques au préjudice d'une perte considérable d'énergie.

Le dispositif est complexe car les gaz sont acheminés en dehors de la structure (tour) pour effectuer les réactions d'oxydation du SO₂ et les réactions de réduction des NOₓ.

Les condensats récupérés sont pollués par des éléments chimiques autres que ceux initialement prévus, du fait de la condensation « sauvage » exécutée dans la tour. Un autre approche est divulgué dans le document DE3733319 A1 dans lequel la dépollution des gaz acides contenant des oxydes de soufres par la mise en contact avec de l'ammoniac est décrite. Parmi les objectifs de l'invention, on peut citer :
- la dépollution efficace des gaz ;
- la récupération des condensats sous une forme pure ou quasi-pure ;
- la réutilisation de ces condensats pour la dépollution et pour d'autres applications ;
- le recyclage thermique à partir de la température des condensats ou des fumées ;
- la simplicité du dispositif ;
- l'optimisation énergétique du dispositif dans son ensemble avec utilisation de la chaleur des gaz industriels pour produire de l'électricité à l'aide d'une machine à Cycle Organique de Rankine, connu également sous l'acronyme anglais ORC.

Les machines à Cycle Organique de Rankine permettent de produire de l'électricité et de l'énergie en général en utilisant des températures faibles, à partir de 80°C.

Les termes « pur » et « quasi-pur » signifient que l'on récupère une solution comprenant en majorité les éléments chimiques que l'on souhaite récupérer.

Afin d'atteindre ces objectifs, la dépollution se base sur les courbes de rosée et les courbes d'ébullition de chaque composé chimique des gaz.

C'est la raison pour laquelle la composition initiale des gaz acides doit être connue afin de se baser sur les bonnes courbes de rosée et d'ébullition. Le débit des gaz acides doit être également connu afin de contrôler leur refroidissement.

La courbe de rosée donne la température à partir de laquelle apparaît la première goutte de liquide pour un composé chimique à une pression donnée. La courbe d'ébullition donne la température à partir de laquelle apparaît la première bulle de vapeur pour un composé chimique à une pression donnée. Certains mélanges disposent d'un point azéotrope à l'instar du mélange H₂O + HNO₃ pour une quantité de HNO₃ comprise entre 30% et 40% dans le mélange. Il est judicieux lorsque ce point existe d'exploiter les propriétés du mélange.

L'azéotrope est le point où le composé chimique passe d'une phase gazeuse à une phase liquide à température constante.

Il est proposé en premier lieu un dispositif d'extraction d'un composé chimique d'un gaz dont la composition initiale, le débit et la pression partielle des éléments chimiques qui le composent sont connus. Ce dispositif comprend une enveloppe définissant un volume traversé par le gaz et muni à une première extrémité d'une entrée par laquelle s'engouffre le gaz pollué et à une seconde extrémité d'une sortie par laquelle s'échappe le gaz dépollué. Le dispositif comprend au moins un étage de dépollution dans l'enveloppe, cet étage de dépollution comprenant des moyens d'injection d'une solution acide dans le gaz. L'étage de dépollution comprend en outre :
- un plateau de récupération des condensats disposé en amont des moyens d'injection par rapport au sens de déplacement du gaz, ce plateau de récupération étant dimensionné de sorte que le plateau de récupération obture l'enveloppe du dispositif, le plateau de récupération étant perméable aux gaz et imperméable aux liquides ;
- un circuit de récupération comprenant un réservoir de récupération en connexion fluidique d'une part avec le plateau de récupération pour recevoir les condensats et en connexion fluidique d'autre part avec les moyens d'injection pour alimenter ceux-ci en solution acide au moyen d'une pompe fluidique ;

- des moyens de mesure de la température des gaz en entrée de l'étage de dépollution et des moyens de mesure de la température de la solution acide ;
- une unité de contrôle dans laquelle un programme est implémenté, ce programme étant configuré pour opérer des étapes :
   ∘ de mesure de la température des gaz en entrée de l'étage de dépollution ;
   ∘ de mesure de la température de la solution acide à pulvériser ;
   ∘ d'ajustement de la température de la solution acide de sorte que les gaz soient refroidis à une température située juste en dessous de l'azéotrope du composé chimique à condenser ;
   ∘ de pulvérisation de la solution acide dans l'étage de dépollution ;
   ∘ de récupération du composé chimique condensé sous forme de condensats en phase liquide ;
   ∘ d'injection de la solution récupérée dans l'enveloppe de l'étage de dépollution.

Diverses caractéristiques supplémentaires peuvent être prévues, seules ou en combinaison :
- le dispositif comprend un garnissage situé entre le plateau de récupération et les moyens d'injection de la solution acide ;
- le réservoir de récupération comprend un pH mètre permettant de mesurer l'acidité de la solution acide ;
- un robinet doseur-électronique est agencé pour injecter de l'eau dans le réservoir de récupération lorsque l'acidité de la solution acide dépasse un seuil prédéterminé ;
- le programme informatique est agencé pour mesurer continuellement le pH de la solution acide et pour injecter de l'eau dans la solution acide lorsque l'acidité de la solution acide dépasse un seuil prédéterminé ;
- le réservoir de récupération comprend une évacuation permettant d'évacuer le trop plein ;
- les moyens de mesure de la température de la solution acide sont positionnés en amont des moyens d'injection de la solution acide par rapport au sens de déplacement de la solution acide ;
- un circuit de recyclage thermique dans lequel circule un fluide caloporteur, le circuit de recyclage thermique intégrant un échangeur thermique disposé à l'intérieur de l'étage de dépollution ou dans le réservoir de récupération. Le circuit de recyclage thermique est agencé pour chauffer un fluide caloporteur d'un cycle Rankine Organique pour produire de l'énergie.

Il est proposé en second lieu, un procédé de dépollution et de recyclage thermique d'un gaz dont la composition initiale, le débit et la pression partielle des éléments chimiques sont connus. Ce procédé met en oeuvre le dispositif précédemment décrit et comprend des étapes :
- de mesure de la température des gaz en entrée de l'étage de dépollution ;
- de mesure de la température de la solution acide à pulvériser ;
- d'ajustement de la température de la solution acide de sorte que les gaz soient refroidis à une température située juste en dessous de l'azéotrope du composé chimique à condenser ;
- de pulvérisation de la solution acide dans l'étage de dépollution afin de refroidir les gaz ;
- de récupération du composé chimique en phase liquide ;
- d'injection de la solution acide récupérée dans l'enveloppe de l'étage de dépollution ;
ce procédé étant répété continuellement dans chaque étage de dépollution du dispositif.

Diverses caractéristiques supplémentaires peuvent être prévues, seules ou en combinaison :
- le pH de la solution acide est mesuré en continu et réajusté lorsque l'acidité dépasse un seuil prédéterminé ;

Ce dispositif et ce procédé permettent une dépollution efficace avec récupération des condensats sous une forme pure ou quasi-pure. Il est en outre possible de réutiliser ces condensats compte tenu de leur pureté tout en extrayant la chaleur du dispositif grâce au circuit de recyclage thermique. Le dispositif est ainsi moins énergivore que les dispositifs de dépollution conventionnels et consomme moins en solution acide.

D'autres objets et avantages de l'invention apparaîtront à la lumière de la description d'un mode de réalisation, faite ci-après en référence aux dessins annexés dans lesquels :
- la figure 1 est une vue en perspective d'extraction d'un composé chimique et de recyclage thermique comprenant une découpe permettant de voir l'intérieur du dispositif ;
- la figure 2 est une représentation schématique d'un étage de dépollution selon un premier mode de réalisation ;
- la figure 3 est une représentation schématique d'une pluralité d'étages de dépollution selon le premier mode de réalisation, connectés les uns aux autres ;
- la figure 4 est une représentation schématique d'un étage de dépollution selon un second mode de réalisation ;
- la figure 5 est une représentation schématique d'une pluralité d'étages de dépollution selon le second mode de réalisation, connectés les uns aux autres ;

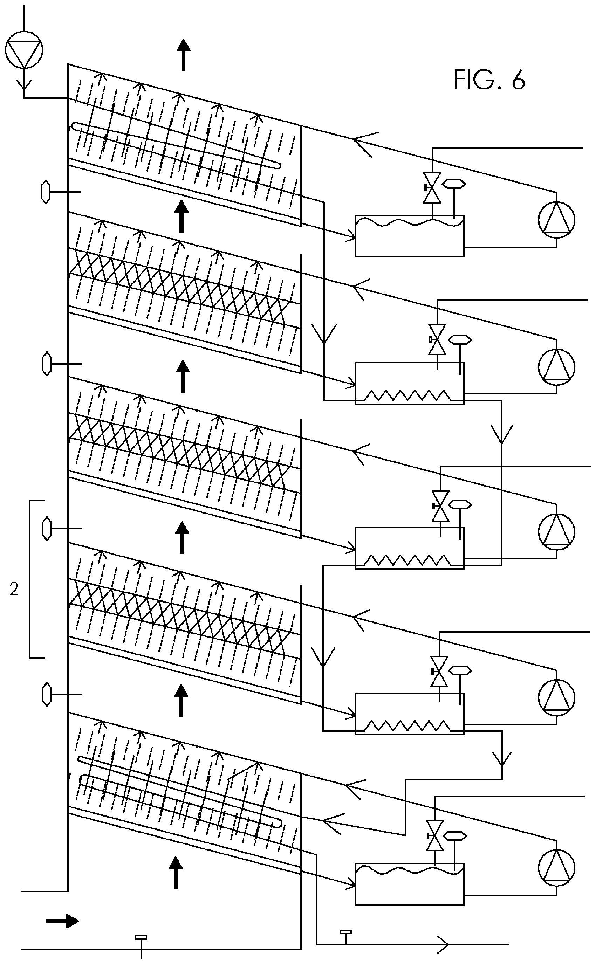

- la figure 6 est une représentation schématique d'une pluralité d'étages de dépollution selon le premier et le second mode de réalisation, connectés les uns aux autres ;
- la figure 7 est un graphe présentant les courbes de rosée du trioxyde de soufre (SO₃) pour différents volumes d'eau dans les gaz à traiter, l'ordonnée donnant la température et l'abscisse le pourcentage de SO₃ ;
- la figure 8 est un graphe présentant les courbes de rosée du dioxyde de soufre (SO₂) pour différents volumes d'eau dans les gaz à traiter l'ordonnée donnant la température et l'abscisse le pourcentage de SO₂ ;
- la figure 9 est un graphe présentant les courbes de rosée du dioxyde d'azote (NO₂) pour différents volumes d'eau dans les gaz à traiter, l'ordonnée donnant la température et l'abscisse le pourcentage de NO₂ ;
- la figure 10 est un graphe présentant les courbes de rosée du chlorure d'hydrogène (HCl) pour différents volumes d'eau dans les gaz à traiter, l'ordonnée donnant la température et l'abscisse le pourcentage de HCl ;
- la figure 11 est un graphe présentant les courbes de rosée du fluorure d'hydrogène (HF) pour différents volumes d'eau dans les gaz à traiter, l'ordonnée donnant la température et l'abscisse le pourcentage de HF ;
- la figure 12 est un graphe présentant les courbes de rosée et d'ébullition d'une solution d'acide sulfurique (H₂O + H₂SO₄) à une pression de 0,17 bar, l'ordonnée donnant la température et l'abscisse le pourcentage de H₂SO₄ ;
- la figure 13 est un graphe présentant les courbes de rosée et d'ébullition d'une solution d'acide nitrique (H₂O + HNO₃) à une pression de 0,17 bar, l'ordonnée donnant la température et l'abscisse le pourcentage de HNO₃.

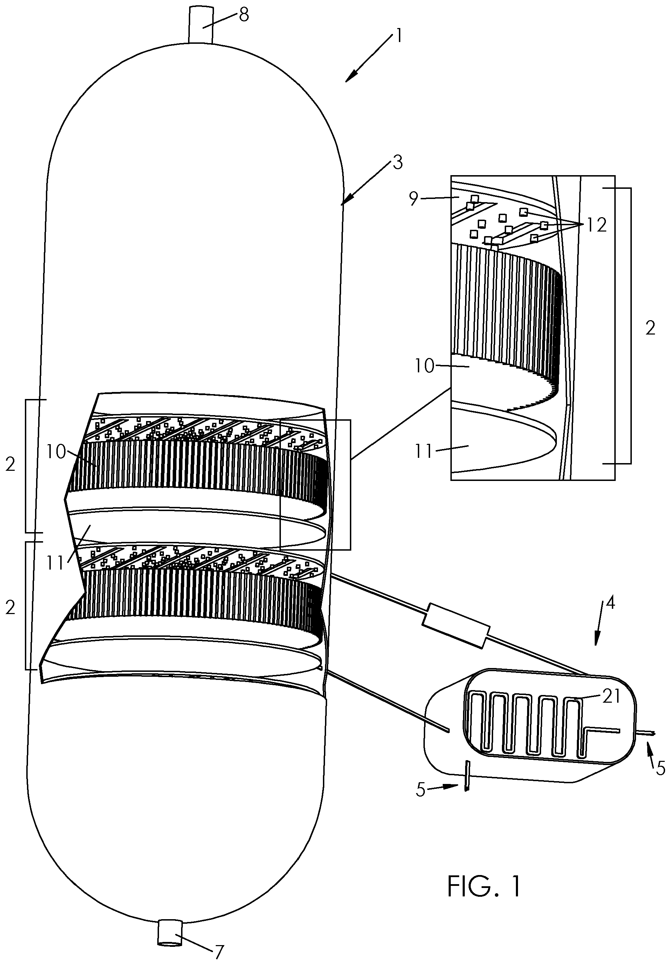

Sur la figure 1 est représenté un dispositif **1** d'extraction d'un composé chimique et de recyclage thermique, ci-après dénommé le dispositif, comprenant une pluralité d'étages **2** de dépollution. Le dispositif **1** comprend une enveloppe **3** définissant un volume. Dans le mode réalisation représenté, l'enveloppe **3** présente une section cylindrique toutefois, il est tout à fait possible que l'enveloppe **3** définisse une autre section, par exemple carrée ou rectangulaire. Chaque étage **2** de dépollution comprend un circuit **4** de récupération des condensats et un circuit **5** de recyclage thermique. Pour des raisons de clarté, un seul étage **2** de dépollution comportant un circuit **4** de récupération des condensats et un circuit **5** de recyclage thermique est représenté sur la figure 1.

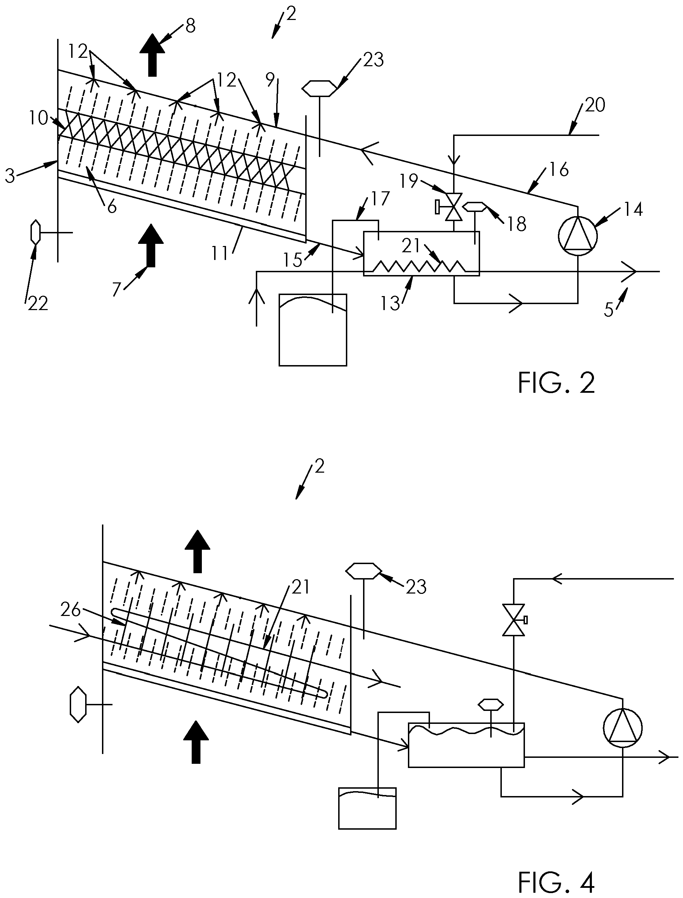

La figure 2 illustre un étage **2** de dépollution selon un mode de réalisation du dispositif **1.** L'étage **2** de dépollution fait partie intégrante du dispositif **1.** Ainsi l'étage **2** de dépollution partage avec le dispositif **1,** l'enveloppe **3** définissant une cavité **6** pour le passage d'un gaz, une entrée **7** par laquelle s'engouffre le gaz pollué et une sortie **8** par laquelle s'échappe le gaz au moins partiellement dépollué.

L'étage **2** de dépollution comprend en outre :
- des rampes **9** d'aspersion ;
- un garnissage **10 ;** et
- un plateau **11** de récupération.

Les rampes **9** d'aspersion sont situées au niveau de la sortie **8** et peuvent se présenter sous de multiples formes. Par exemple, les rampes **9** peuvent être sous la forme de tubes munis d'une série d'orifices dimensionnés pour pulvériser une solution acide à l'intérieur de l'enveloppe **3.** En variante, comme cela est représenté sur les figures, la pulvérisation peut se faire grâce à des buses **12** d'injection.

Le garnissage **10** se situe dans l'enveloppe **3,** en amont des rampes **9** d'aspersion par rapport au sens de déplacement des gaz. Il se présente sous la forme d'un manchon métallique (un matériau métallique est préférable compte tenu des températures en jeu de l'ordre de quelques centaines de degrés Celsius au point le plus élevé), dont la section est sensiblement identique à celle de l'enveloppe **3** de sorte que le gaz passe inévitablement à travers le manchon au cours de son déplacement dans l'enveloppe **3.** Le garnissage **10** permet d'augmenter la surface de contact entre la solution acide provenant de la rampe **9** d'aspersion et les fumées traversant le garnissage **10,** améliorant ainsi les échanges thermique et chimique entre la solution acide et le gaz tout en offrant une faible résistance au déplacement des fluides.

Le plateau **11** de récupération est situé dans l'enveloppe **3,** en amont du garnissage **10.** Celui-ci présente la particularité d'être perméable aux gaz et imperméable aux liquides. De même que pour le garnissage **10,** la section du plateau **11** de récupération est identique à celle de l'enveloppe **3.** De la sorte, les condensats liquides provenant du garnissage **10** ne retombent pas dans les gaz au-delà du plateau **11** de récupération, les condensats ne pouvant filtrer à travers ce dernier du fait de son imperméabilité.

Ainsi, les gaz pollués entrent dans l'étage **2** de dépollution en traversant dans un premier temps le plateau **11** de récupération, puis dans un deuxième temps le garnissage **10** où au contact de la solution acide pulvérisée par la rampe **9** d'aspersion, des échanges thermiques et chimiques se font, puis le gaz au moins partiellement dépollué s'échappe par la sortie **8.** Au niveau du garnissage **10,** une partie des gaz se sont condensés sous l'effet des échanges thermiques. Ces condensats tombent avec la solution acide pulvérisée sous l'effet de la gravitation dans le plateau **11** de récupération.

L'étage **2** de dépollution comprend par ailleurs un réservoir **13** de récupération, en connexion fluidique d'une part avec le plateau **11** de récupération, et, d'autre part avec la rampe **9** d'aspersion. Une pompe **14** fluidique permet de faire circuler le fluide depuis le réservoir **13** de récupération vers la rampe **9** d'aspersion. La solution acide contenant les condensats est acheminée depuis le plateau **11** de récupération vers le réservoir **13** de récupération à travers une canalisation **15** de récupération, puis est envoyée vers la rampe **9** d'aspersion à travers une canalisation **16** de recyclage.

Le réservoir **13** de récupération comprend une évacuation **17** destinée à évacuer le trop-plein de solution acide. En effet, les condensats extraits des gaz et récupérés dans le plateau **11** de récupération amènent inévitablement tôt ou tard le réservoir **13** de récupération à la limite de ce qu'il peut contenir. L'évacuation permet ainsi d'évacuer le trop-plein vers les eaux usées, vers une unité de traitement ou encore vers un lieu de stockage pour une utilisation ultérieure.

Un pH mètre **18** permet de mesurer l'acidité de la solution acide dans le réservoir **13** de récupération. La concentration en ion hydrogène peut alors être ajustée dans le réservoir **13** de récupération grâce à un robinet **19** doseur-électronique contrôlant l'arrivée d'eau depuis une canalisation **20** de régulation. La concentration en ion hydrogène tend à augmenter avec l'apport des condensats, ainsi le pH de la solution doit être abaissé de sorte à maintenir les paramètres initiaux de la solution acide.

L'étage **2** de dépollution est également pourvu d'un circuit **5** de recyclage thermique comprenant, notamment, un échangeur **21** thermique situé dans l'enceinte du réservoir **13** de récupération. La chaleur des condensats récupérés dans le réservoir **13** de récupération, est recyclée grâce à l'échangeur **21** thermique. Cette chaleur est ensuite utilisée pour d'autres applications comme le chauffage par exemple.

Afin d'ajuster la température de la solution acide pulvérisée, chaque étage **2** de dépollution est pourvu, en entrée **7,** d'une première sonde **22** de température destinée à mesurer la température des gaz et d'une deuxième sonde **23** de température située sur la canalisation **16** de recyclage. La deuxième sonde **23** de température mesure la température de la solution acide avant que celle-ci n'atteigne la rampe **9** d'aspersion. Il est, alors, possible d'adapter la température de la solution acide pulvérisée à partir des données fournies par les sondes **22, 23** de température. La température de la solution acide pulvérisée est modulée par réglage du débit de la pompe **14** fluidique.

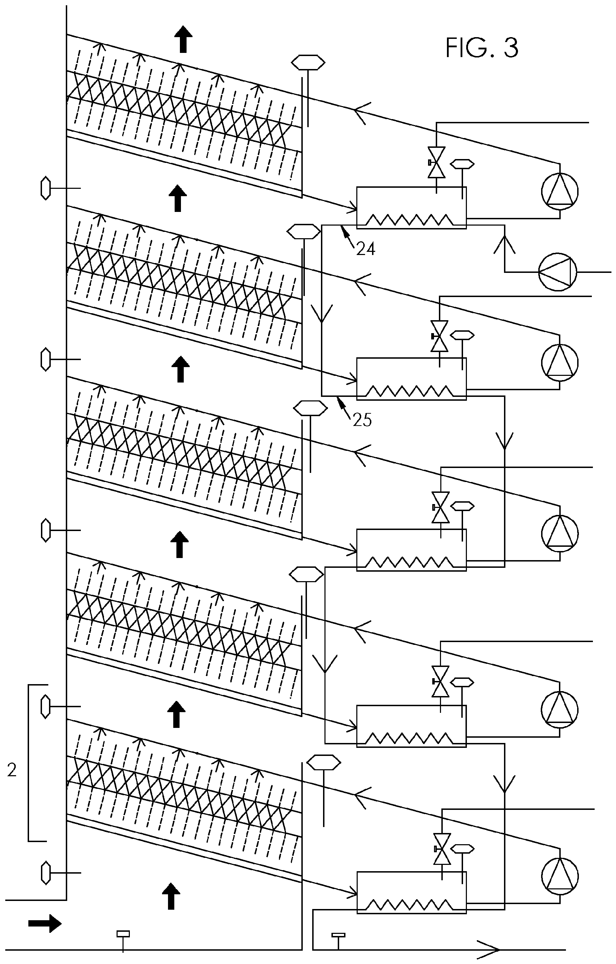

La figure 3 illustre un dispositif **1** d'extraction d'un composé chimique et de recyclage thermique comprenant une pluralité d'étages **2** de dépollution superposés les uns sur les autres. Selon le mode de réalisation représenté, le dispositif **1** comprend cinq étages de dépollution.

Dans l'optique de récupérer une quantité d'énergie thermique sur le plus grand écart de température disponible, les circuits **5** de recyclage thermique sont interconnectés les uns aux autres. Ainsi en partant du premier circuit de recyclage thermique, la sortie **24** de ce dernier est connectée à l'entrée **25** du deuxième circuit de recyclage thermique et ainsi de suite jusqu'au dernier circuit de recyclage thermique.

En pratique, les gaz perdent de la chaleur à chaque étage **2** de dépollution, de sorte qu'en fin de parcours, c'est-à-dire au dernier étage de dépollution, la température des gaz est minimale. C'est la raison pour laquelle il est préférable de démarrer le recyclage thermique à partir du circuit de recyclage thermique du dernier étage de dépollution. Ainsi, le fluide caloporteur traversera consécutivement les réservoirs **13** de récupération de chaque étage de dépollution sans perte de chaleur. Autrement dit, la température du fluide caloporteur variera de manière croissante en passant dans l'échangeur **21** thermique de chaque circuit de recyclage thermique puisque la température des condensats va en augmentant depuis le dernier étage jusqu'au premier étage de dépollution.

La récupération thermique sur le plus grand écart de température possible entre l'entrée et la sortie du circuit de recyclage thermique permet de récupérer le maximum de l'énergie thermique disponible dans les gaz à traiter. Ceci est favorable pour le recyclage thermique et notamment pour fournir de l'énergie à un cycle Rankine Organique.

Un cycle Rankine Organique (non représenté sur les figures) destiné à produire de l'électricité comprend un circuit de production d'énergie. Dans ce circuit de production d'énergie, circule un fluide caloporteur issu de la chimie du carbone. Le fluide caloporteur est chauffé jusqu'à sa température de vaporisation dans un échangeur thermique, grâce à la chaleur récupérée par le circuit de recyclage thermique du dispositif **1.** Le fluide caloporteur ainsi vaporisé, actionne une turbine reliée à un générateur pour la production d'électricité. Le fluide caloporteur peut ensuite être utilisé pour une application chauffage / air conditionné avant d'être à nouveau chauffé.

La figure 4 illustre un étage **2** de dépollution selon un second mode de réalisation. La différence réside principalement dans l'agencement du circuit **5** de récupération thermique.

Dans ce mode de réalisation, le garnissage **10** précédemment utilisé est remplacé par un échangeur **21** thermique à ailettes **26.** Le recyclage thermique se fait dans ce cas en puisant la chaleur directement au contact des gaz et non pas dans le réservoir **13** de récupération comme précédemment. Les ailettes **26** remplacent le garnissage **10** du précédent mode de réalisation.

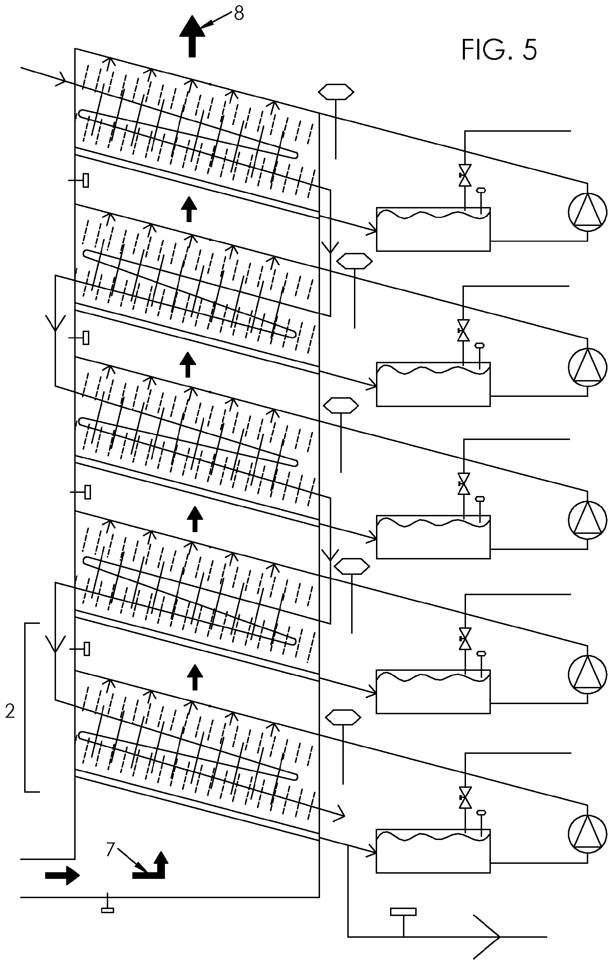

La figure 5 illustre un dispositif **1** d'extraction d'un composé chimique et de recyclage thermique comprenant une pluralité d'étages **2** de dépollution selon le second mode de réalisation de la figure 4. A l'instar du premier mode de réalisation, le recyclage thermique est effectué de haut en bas, c'est-à-dire en puisant tout d'abord la chaleur dans le dernier étage **2** de dépollution avant de finir dans le premier étage de dépollution et ce pour les mêmes raisons que celles précédemment avancées.

Il est à noter que la dépollution se base sur les courbes de rosée des différents composés chimiques présents dans les gaz. C'est la raison pour laquelle la composition du gaz doit être au moins approximativement connue. La dépollution sera d'autant plus efficace que la composition des gaz sera connue avec précision.

Dans ce qui suit nous prendrons l'exemple d'un gaz acide contenant des oxydes de soufre SO₂, SO₃, des oxydes d'azote NO, NO₂ ainsi que du Chlore et du Fluor.

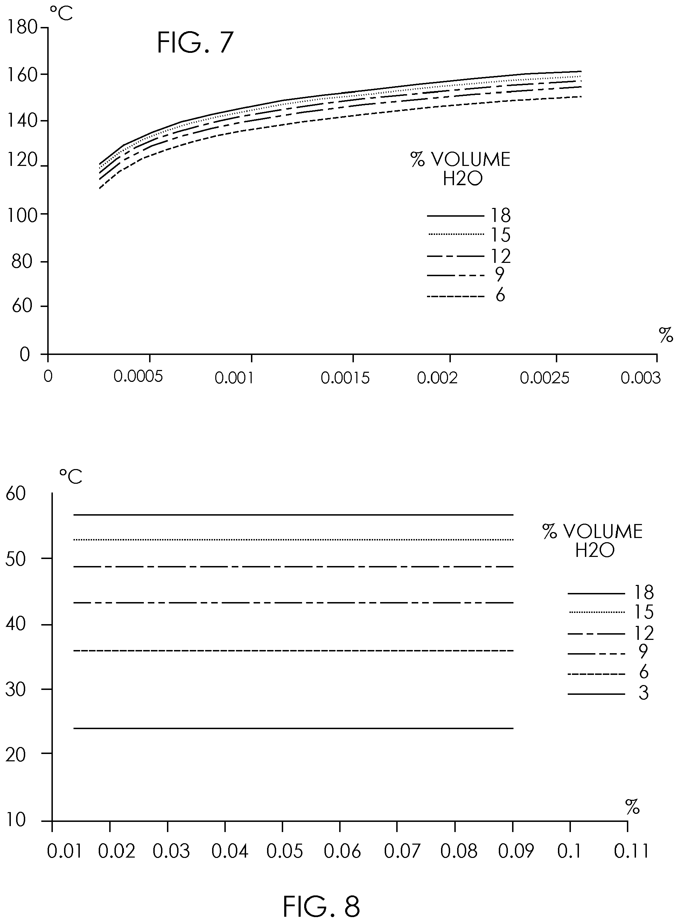

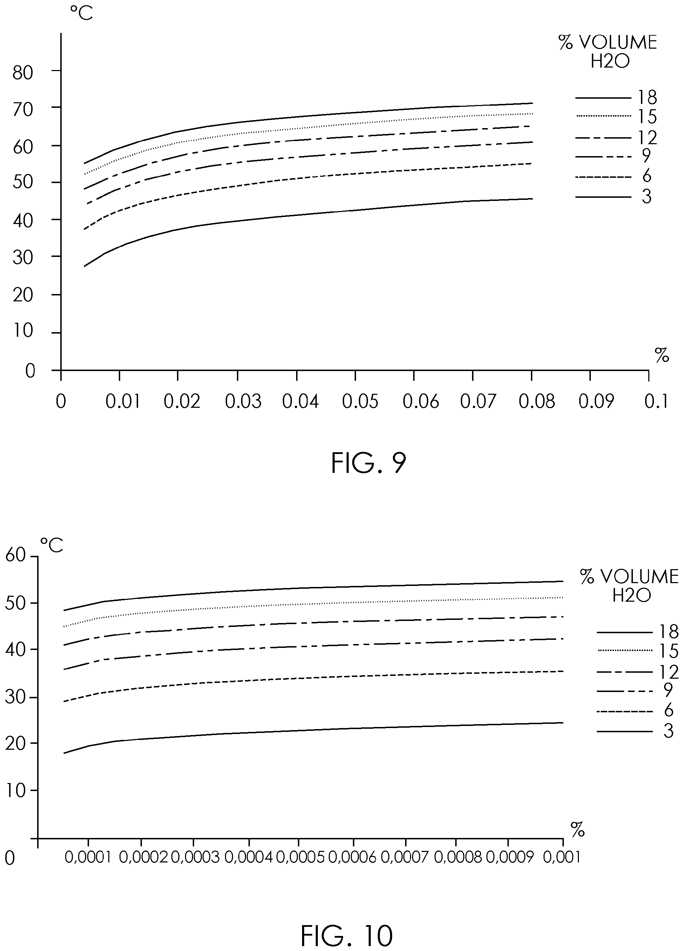

Les figures 7-11 représentent respectivement les courbes de rosée du trioxyde de soufre (SO₃), du dioxyde de soufre (SO₂), du dioxyde d'azote (NO₂), du chlorure d'hydrogène (HCl) et du fluorure d'hydrogène (HF).

Il est observable que le trioxyde de soufre présente les points de rosée les plus élevés. Autrement dit, la condensation se fait à une température supérieure par rapport aux autres composés chimiques.

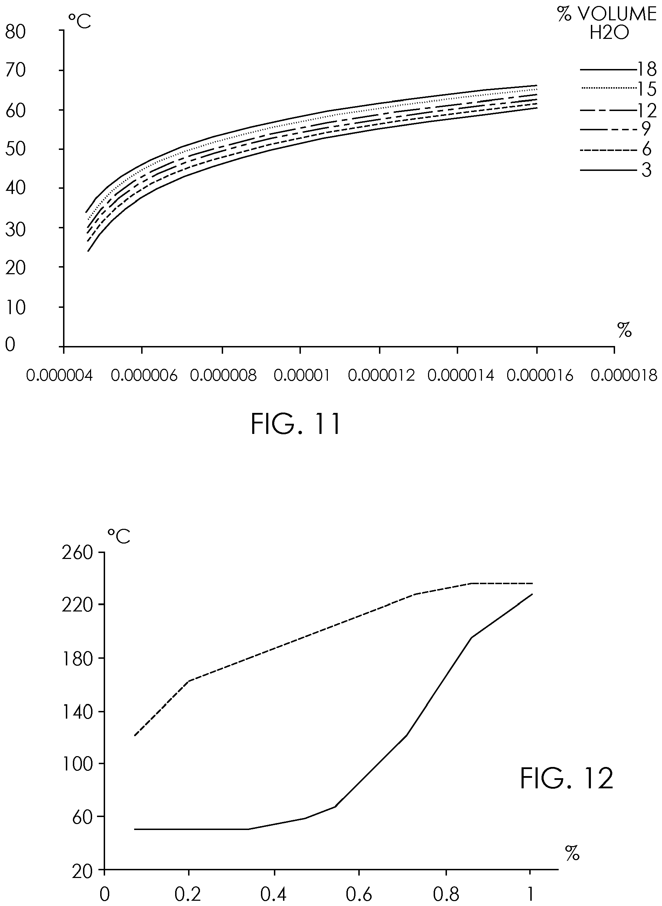

La figure 12 montre qu'une solution d'acide sulfurique pure se condense à une température de 240°C et pour une pression partielle de l'eau et de l'acide sulfurique de 0,17 bar dans les gaz à traiter.

Ainsi le refroidissement contrôlé du gaz dans le premier étage **2** de dépollution provoque la condensation des molécules d'acide sulfurique. Autrement dit, il s'agit de pulvériser, dans le premier étage **2** de dépollution, une solution dont la température est contrôlée. Ce réglage fin est effectué en tenant compte de la température des gaz à l'entrée de l'étage **2** de dépollution et de la température de la solution acide dans la canalisation **16** de recyclage. C'est ainsi qu'est finement contrôlé le refroidissement des gaz.

La température n'étant pas la seule variable, nous prenons également en compte la composition chimique de la solution acide pulvérisée. Ainsi en la choisissant de manière judicieuse, le SO₂ contenu dans les gaz est oxydé en SO₃ et ce dès le premier étage **2** de dépollution.

En pulvérisant une solution d'acide sulfurique (H₂O + H₂SO₄), les échanges chimiques qui se font au niveau du garnissage **10** impliquent, dans cet exemple, la production de SO₃ (par réaction de l'eau avec le SO₂), qui se condense dans le premier étage **2** de dépollution compte tenu du refroidissement appliqué par la pulvérisation à une température contrôlée par le débit de la pompe fluidique. C'est ainsi qu'en contrôlant à la fois la composition de la solution acide, sa température ainsi que sa concentration, il devient possible de ne condenser qu'un composé chimique, en l'occurrence dans cet étage **2** de dépollution, le trioxyde de soufre qui devient instantanément à son tour de l'acide sulfurique au contact de l'eau. Ceci permet d'obtenir un condensat pur ou tout du moins quasi-pur au profit du recyclage de la solution acide, puisqu'il n'est pas nécessaire de réajuster la concentration de celle-ci grâce au robinet doseur aussi souvent que dans le cas où plusieurs composés chimiques seraient récupérés dans le plateau de récupération. En l'occurrence, ici il s'agit du SO₃ qui nous le rappelons forme instantanément avec l'eau de l'acide sulfurique.

Le SO₃ récupéré dans le plateau **11** de récupération et qui s'est transformé en acide sulfurique est, alors, réinjecté dans l'étage **2** de dépollution. Parallèlement, le pH de la solution acide est mesuré dans le réservoir **13** de récupération. Avec l'apport de condensats acides, le pH augmente. Le robinet **19** doseur-électronique ajuste le pH simplement en ajoutant de l'eau.

Cette technique est répétée à chaque étage **2** du dispositif **1** d'extraction en refroidissant d'une part les gaz afin de condenser les composés chimiques visés, et d'autre part en modifiant la composition chimique des gaz en choisissant de manière précise la solution acide pulvérisée. La solution acide (qui contient de l'eau) modifie également la teneur en eau des gaz à traiter. Il est alors possible de contrôler judicieusement la teneur en eau pour modifier la température de condensation d'un gaz acide. A cet effet, on remarque sur la figure 12 qu'en augmentant la teneur en eau dans les gaz à traiter (ce qui a pour conséquence de diminuer en pourcentage la teneur en acide sulfurique dans les gaz à traiter par rapport à la teneur en eau), on abaisse la température de condensation de l'acide sulfurique. On comprend donc que faire varier la teneur en eau dans les gaz à traiter permet de modifier la température de condensation des éléments chimiques que l'on souhaite récupérer.

La tâche se complique néanmoins lorsqu'il s'agit de condenser des gaz à une température plus faible. Il est observable sur les figures 8-10 que les températures de condensation du NO₂, du HCl et du SO₂ sont proches les unes des autres. Au sein d'un deuxième étage les condensats récupérés seront un mélange de plusieurs composés chimiques puisqu'un refroidissement simple des gaz impliquera nécessairement la condensation de plusieurs espèces présentes dans ceux-ci.

Afin de limiter les mélanges d'acides, et pour récupérer des condensats qui soient les plus purs possible, il convient d'ajuster au mieux la température de pulvérisation et la teneur en eau du gaz à traiter afin d'amener les gaz précisément en dessous de la température de condensation du composé chimique que l'on souhaite condenser.

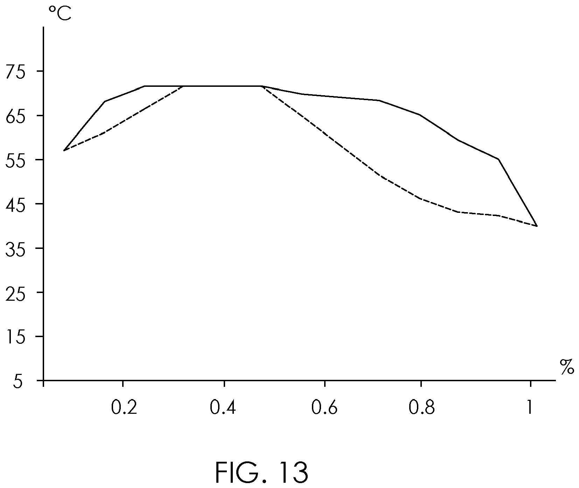

La figure 13 illustre un diagramme de phase d'une solution d'eau et d'acide nitrique. L'azéotrope de cette solution est atteint pour un pourcentage en masse d'acide nitrique dans la solution compris entre 30 et 40 % et pour une température d'environ 70°C.

Le NO₂ présent dans les gaz s'oxyde avec la solution acide contenant de l'eau, pour former du trioxyde d'azote. Ainsi, afin de condenser le NO₃ présent dans les gaz suite à la réaction chimique, il suffit de se positionner juste en dessous de l'azéotrope de la solution d'acide nitrique pour obtenir la condensation de ce dernier sans passer par un état transitoire (phase liquide + phase vapeur).

Cette technique est ensuite à nouveau appliquée pour extraire le Fluor et le Chlore. On remarque que les températures de rosée du HCl et du HF sont proches les unes des autres. En connaissant le point de rosée associé aux concentrations en vapeur d'eau et en gaz Fluor ou Chlore, il devient possible de les condenser séparément l'un de l'autre grâce à un réglage fin de la température de la solution pulvérisée, en se positionnant juste en dessous du point de rosée. Ainsi, dans un étage de dépollution, nous obtiendrons des condensats purs ou quasipurs de Chlore et dans un autre étage de dépollution, des condensats de Fluor.

Le point azéotrope est une exception que présentent certains mélanges. Lorsque ce point existe, il est intéressant de condenser les gaz acides que l'on souhaiter récupérer, au niveau de ce point. En pratique, il s'agit d'identifier ce point en connaissant les caractéristiques des gaz à traiter. Le refroidissement des gaz pollués est alors contrôlé de sorte à abaisser la température juste en dessous du point azéotrope. Ainsi la condensation se fait à température constante.

Comme précédemment évoqué, parallèlement à la dépollution des gaz, la chaleur des condensats est utilisée pour d'autres applications grâce au circuit **5** de recyclage thermique. Le fluide caloporteur traverse dans un mode de réalisation chaque réservoir **13** de récupération, à contre-courant en partant du dernier réservoir de récupération, c'est-à-dire du réservoir **13** de récupération où les condensats présentent la température la plus basse en comparaison des condensats des autres réservoirs de récupération. Ceci permet d'optimiser le gain en température du fluide caloporteur.

Ce procédé est opéré par une unité de contrôle (non représentée) dans laquelle est implémenté un programme informatique. Le programme informatique est agencé pour opérer les étapes :
- de mesure de la température des gaz en entrée **7** de l'étage **2** de dépollution à l'aide de la première sonde **22** de température ;
- de mesure de la température de la solution acide à pulvériser dans l'étage **2** de dépollution à l'aide de la deuxième sonde **23** de température ;
- d'ajustement de la température de la solution acide de sorte que les gaz soient refroidis à une température située juste en dessous du point de rosée du composé chimique à condenser ;
- de pulvérisation de la solution acide dans l'étage **2** de dépollution au moyen de la rampe **9** d'aspersion afin de refroidir les gaz ;
- de récupération du composé chimique condensé sous forme de condensats en phase liquide dans le plateau **11** de récupération ;
- d'injection de la solution acide récupérée dans l'enveloppe **3** de l'étage **2** de dépollution.

Le programme informatique est en outre agencé pour mesurer continuellement l'acidité de la solution acide contenue dans le réservoir **13** de récupération. Lorsque l'acidité dépasse un seuil prédéterminé, le programme informatique ordonne l'ouverture du robinet **19** doseur-électronique afin de diluer la solution acide et ainsi abaisser son pH.

Parmi les avantages procurés par le dispositif, on peut citer :
- le recyclage des condensats sous une forme pure ou quasi-pure, ainsi il n'est pas nécessaire d'ajouter, en continue, de la solution acide puisque l'acidité de la solution est maintenue grâce au condensat et son pH est ajusté grâce à l'ajout d'eau dans le réservoir **13** de récupération ;
- la possibilité de récupérer une partie des condensats pour d'autres applications ;
- la possibilité d'utiliser la chaleur des condensats dans différentes applications associées au procédé ou pour produire de l'électricité par système Rankine Organique.

## Revendications

1. Dispositif (**1**) d'extraction d'un composé chimique d'un gaz acide dont la composition initiale, le débit et la pression partielle des éléments chimiques qui le compose sont connus, ce dispositif comprenant une enveloppe (**3**) définissant un volume traversé par le gaz et muni à une première extrémité d'une entrée (**7**) par laquelle s'engouffre le gaz pollué et à une seconde extrémité d'une sortie (**8**) par laquelle s'échappe le gaz dépollué, le dispositif comprenant au moins un étage (**2**) de dépollution dans l'enveloppe (**3**), cet étage (**2**) de dépollution comprenant des moyens (**9**) d'injection d'une solution acide dans le gaz,
**caractérisé en ce que** l'étage (**2**) de dépollution comprend :
- un plateau (**11**) de récupération des condensats disposé en amont des moyens (**9**) d'injection par rapport au sens de déplacement du gaz, ce plateau (**11**) de récupération étant dimensionné de sorte que le plateau (**11**) de récupération obture l'enveloppe (**3**) du dispositif (**1**), le plateau (**11**) de récupération étant perméable aux gaz et imperméable aux liquides ;
- un circuit (**4**) de récupération comprenant un réservoir (**13**) de récupération en connexion fluidique d'une part avec le plateau (**11**) de récupération pour recevoir les condensats et en connexion fluidique d'autre part avec les moyens (**9**) d'injection pour alimenter ceux-ci en solution acide au moyen d'une pompe (**14**) fluidique ;
- des moyens (**22**) de mesure de la température des gaz en entrée de l'étage de dépollution et des moyens (**23**) de mesure de la température de la solution acide ;
- une unité de contrôle dans laquelle un programme est implémenté, ce programme étant configuré pour opérer des étapes :
∘ de mesure de la température des gaz en entrée de l'étage de dépollution ;
∘ de mesure de la température de la solution acide à pulvériser ;
∘ d'ajustement de la température de la solution acide de sorte que les gaz soient refroidis à une température située juste en dessous du point de rosée ou du point azéotrope du composé chimique à condenser ;
∘ de pulvérisation de la solution acide dans l'étage (2) de dépollution ;
∘ de récupération du composé chimique condensé sous forme de condensats en phase liquide ;
∘ d'injection de la solution récupérée dans l'enveloppe de l'étage de dépollution.

2. Dispositif (**1**) d'extraction d'un composé chimique selon la revendication 1, **caractérisé en ce qu'**il comprend un garnissage (**10**) situé entre le plateau (**11**) de récupération et les moyens (**9**) d'injection de la solution acide.

3. Dispositif (**1**) d'extraction d'un composé chimique selon l'une quelconque des revendications précédentes, **caractérisé en ce que** le réservoir (**13**) de récupération comprend un pH mètre (**18**) permettant de mesurer l'acidité de la solution acide.

4. Dispositif (**1**) d'extraction d'un composé chimique selon l'une quelconque des revendications, précédentes **caractérisé en ce qu'**un robinet (**19**) doseur-électronique est agencé pour injecter de l'eau dans le réservoir (**13**) de récupération lorsque l'acidité de la solution acide dépasse un seuil prédéterminé.

5. Dispositif (**1**) d'extraction d'un composé chimique selon la revendication 4, **caractérisé en ce que** le programme est agencé pour mesurer continuellement le pH de la solution acide et pour injecter de l'eau dans la solution acide lorsque l'acidité de la solution acide dépasse un seuil prédéterminé.

6. Dispositif (**1**) d'extraction d'un composé chimique selon l'une quelconque des revendications précédentes, **caractérisé en ce que** le réservoir (**13**) de récupération comprend une évacuation (**17**) permettant d'évacuer le trop plein.

7. Dispositif (**1**) d'extraction d'un composé chimique selon l'une quelconque des revendications précédentes, **caractérisé en ce que** les moyens (**23**) de mesure de la température de la solution acide sont positionnés en amont des moyens d'injection de la solution acide par rapport au sens de déplacement de la solution acide.

8. Dispositif (**1**) d'extraction d'un composé chimique selon l'une quelconque des revendications, précédentes **caractérisé en ce que** celui-ci comprend un circuit (**5**) de recyclage thermique dans lequel circule un fluide caloporteur, le circuit (**5**) de recyclage thermique intégrant un échangeur (**21**) thermique disposé à l'intérieur de l'étage (**2**) de dépollution ou dans le réservoir (**13**) de récupération, le circuit (**5**) de recyclage thermique étant agencé pour chauffer un fluide caloporteur d'un cycle Rankine Organique pour produire de l'énergie.

9. Procédé d'extraction d'un composé chimique d'un gaz acide dont la composition initiale, le débit et la pression partielle des éléments chimiques sont connus, ce procédé mettant en oeuvre le dispositif selon l'une quelconque des revendications précédentes, ce procédé comprenant des étapes :
- de mesure de la température des gaz en entrée de l'étage (2) de dépollution ;
- de mesure de la température de la solution acide à pulvériser ;
- d'ajustement de la température de la solution acide de sorte que les gaz soient refroidis à une température située juste en dessous du point de rosée ou du point azéotrope du composé chimique à condenser ;
- de pulvérisation de la solution acide dans l'étage (**2**) de dépollution afin de refroidir les gaz ;
- de récupération du composé chimique condensé sous forme de condensats en phase liquide ;
- d'injection de la solution acide récupérée dans le l'enveloppe (**3**) de l'étage (**2**) de dépollution ;
ce procédé étant répété continuellement dans chaque étage (**2**) de dépollution du dispositif (**1**).

10. Procédé de dépollution et de recyclage thermique selon la revendication 9, **caractérisé en ce que** le pH de la solution acide est mesuré en continu et réajusté lorsque l'acidité dépasse un seuil prédéterminé.

## Patentansprüche

1. Vorrichtung (1) zur Extraktion einer chemischen Verbindung aus einem sauren Gas, von dem die anfängliche Zusammensetzung, der Durchsatz und der Partialdruck der chemischen Elemente, aus denen es besteht, bekannt sind, wobei diese Vorrichtung eine Hülle (3) umfasst, die ein Volumen definiert, das von dem Gas durchquert wird und an einem ersten Ende mit einem Eingang (7), über welchen das verunreinigte Gas einströmt, und an einem zweiten Ende mit einem Ausgang (8), über welchen das gereinigte Gas entweicht, versehen ist, wobei die Vorrichtung wenigstens eine Reinigungsstufe (2) in der Hülle (3) umfasst, wobei diese Reinigungsstufe (2) Mittel (9) zur Einspritzung einer sauren Lösung in das Gas umfassen,
**dadurch gekennzeichnet, dass** die Reinigungsstufe (2) umfasst:
- eine Platte (11) zur Rückgewinnung der Kondensate, die, auf die Strömungsrichtung des Gases bezogen, stromaufwärts der Einspritzmittel (9) angeordnet ist, wobei diese Rückgewinnungsplatte (11) derart bemessen ist, dass die Rückgewinnungsplatte (11) die Hülle (3) der Vorrichtung (1) verschließt, wobei die Rückgewinnungsplatte (11) durchlässig für Gase und undurchlässig für Flüssigkeiten ist;
- einen Rückgewinnungskreis (4), der einen Rückgewinnungsbehälter (13) umfasst, der einerseits mit der Rückgewinnungsplatte (11) in Fluidverbindung steht, um die Kondensate aufzunehmen, und andererseits mit den Einspritzmitteln (9) in Fluidverbindung steht, um diese mittels einer Fluidpumpe (14) mit saurer Lösung zu speisen;
- Mittel (22) zur Messung der Temperatur der Gase am Eingang der Reinigungsstufe und Mittel (23) zur Messung der Temperatur der sauren Lösung;
- eine Steuereinheit, in welcher ein Programm implementiert ist, wobei dieses Programm dafür ausgelegt ist, die folgenden Schritte durchzuführen:
o der Messung der Temperatur der Gase am Eingang der Reinigungsstufe;
o der Messung der Temperatur der zu zerstäubenden sauren Lösung;
o der Einstellung der Temperatur der sauren Lösung, derart, dass die Gase auf eine Temperatur abgekühlt werden, die unmittelbar unterhalb des Taupunktes oder des azeotropen Punktes der zu kondensierenden chemischen Verbindung liegt;
o der Zerstäubung der sauren Lösung in der Reinigungsstufe (2);
o der Rückgewinnung der kondensierten chemischen Verbindung in Form von Kondensaten in flüssiger Phase;
∘ der Einspritzung der rückgewonnenen Lösung in die Hülle der Reinigungsstufe.

2. Vorrichtung (1) zur Extraktion einer chemischen Verbindung nach Anspruch 1, **dadurch gekennzeichnet, dass** sie eine Ausfütterung (10) umfasst, die sich zwischen der Rückgewinnungsplatte (11) und den Mitteln (9) zur Einspritzung der sauren Lösung befindet.

3. Vorrichtung (1) zur Extraktion einer chemischen Verbindung nach einem der vorhergehenden Ansprüche, **dadurch gekennzeichnet, dass** der Rückgewinnungsbehälter (13) ein pH-Messgerät (18) umfasst, welches ermöglicht, den Säuregehalt der sauren Lösung zu messen.

4. Vorrichtung (1) zur Extraktion einer chemischen Verbindung nach einem der vorhergehenden Ansprüche, **dadurch gekennzeichnet, dass** ein elektronischer Dosierhahn (19) dafür ausgelegt ist, Wasser in den Rückgewinnungsbehälter (13) einzuspritzen, wenn der Säuregehalt der sauren Lösung einen vorbestimmten Schwellenwert überschreitet.

5. Vorrichtung (1) zur Extraktion einer chemischen Verbindung nach Anspruch 4, **dadurch gekennzeichnet, dass** das Programm dafür ausgelegt ist, kontinuierlich den pH-Wert der sauren Lösung zu messen und Wasser in die saure Lösung einzuspritzen, wenn der Säuregehalt der sauren Lösung einen vorbestimmten Schwellenwert überschreitet.

6. Vorrichtung (1) zur Extraktion einer chemischen Verbindung nach einem der vorhergehenden Ansprüche, **dadurch gekennzeichnet, dass** der Rückgewinnungsbehälter (13) einen Ablass (17) umfasst, der es ermöglicht, den Überlauf abzulassen.

7. Vorrichtung (1) zur Extraktion einer chemischen Verbindung nach einem der vorhergehenden Ansprüche, **dadurch gekennzeichnet, dass** die Mittel (23) zur Messung der Temperatur der sauren Lösung, auf die Bewegungsrichtung der sauren Lösung bezogen, stromaufwärts der Mittel zur Einspritzung einer sauren Lösung positioniert sind.

8. Vorrichtung (1) zur Extraktion einer chemischen Verbindung nach einem der vorhergehenden Ansprüche, **dadurch gekennzeichnet, dass** sie einen Wärmerückgewinnungskreis (5) umfasst, in welchem ein Wärmeträgerfluid zirkuliert, wobei in den Wärmerückgewinnungskreis (5) ein Wärmetauscher (21) integriert ist, der im Inneren der Reinigungsstufe (2) oder im Rückgewinnungsbehälter (13) angeordnet ist, wobei der Wärmerückgewinnungskreis (5) dafür ausgelegt ist, ein Wärmeträgerfluid eines organischen Rankine-Kreisprozesses zu erwärmen, um Energie zu erzeugen.

9. Verfahren zur Extraktion einer chemischen Verbindung aus einem sauren Gas, von dem die anfängliche Zusammensetzung, der Durchsatz und der Partialdruck der chemischen Elemente bekannt sind, wobei bei diesem Verfahren die Vorrichtung nach einem der vorhergehenden Ansprüche eingesetzt wird, wobei dieses Verfahren die folgenden Schritte umfasst:
- der Messung der Temperatur der Gase am Eingang der Reinigungsstufe (2);
- der Messung der Temperatur der zu zerstäubenden sauren Lösung;
- der Einstellung der Temperatur der sauren Lösung, derart, dass die Gase auf eine Temperatur abgekühlt werden, die unmittelbar unterhalb des Taupunktes oder des azeotropen Punktes der zu kondensierenden chemischen Verbindung liegt;
- der Zerstäubung der sauren Lösung in der Reinigungsstufe (2), um die Gase zu kühlen;
- der Rückgewinnung der kondensierten chemischen Verbindung in Form von Kondensaten in flüssiger Phase;
- der Einspritzung der rückgewonnenen sauren Lösung in die Hülle (3) der Reinigungsstufe (2) ;
wobei dieses Verfahren in jeder Reinigungsstufe (2) der Vorrichtung (1) kontinuierlich wiederholt wird.

10. Verfahren zur Reinigung und Wärmerückgewinnung nach Anspruch 9, **dadurch gekennzeichnet, dass** der pH-Wert der sauren Lösung kontinuierlich gemessen wird und neu eingestellt wird, wenn der Säuregehalt einen vorbestimmten Schwellenwert überschreitet.

## Claims

1. Device (**1**) for extracting a chemical compound from an acid gas, of which the initial composition, the flow rate and the partial pressure of the chemical elements that form it are known, this device comprising a shell (**3**) that defines a volume passed through by the gas and that is equipped at a first end with an inlet (**7**) through which the contaminated gas rushes in and at a second end with an outlet (**8**) through which the decontaminated gas escapes, the device comprising at least one decontamination stage (**2**) in the shell (**3**), this decontamination stage (**2**) comprising means (**9**) for injecting an acid solution into the gas,
**characterized in that** the decontamination stage (**2**) comprises:
- a condensate recovery plate (**11**) positioned upstream of the injection means (**9**) relative to the direction of movement of the gas, this recovery plate (**11**) being sized so that the recovery plate (**11**) seals the shell (**3**) of the device (**1**), the recovery plate (**11**) being permeable to gases and impermeable to liquids;
- a recovery circuit (**4**) comprising a recovery tank (**13**) in fluidic connection, on the one hand, with the recovery plate (**11**) for receiving the condensates and in fluidic connection, on the other hand, with the injection means (**9**) in order to supply these means with acid solution using a fluidic pump (**14**);
- means (**22**) for measuring the temperature of the gases at the inlet of the decontamination stage and means (**23**) for measuring the temperature of the acid solution;
- a control unit in which a program is executed, this program being configured in order to carry out steps:
∘ of measuring the temperature of the gases at the inlet of the decontamination stage;
∘ of measuring the temperature of the acid solution to be sprayed;
∘ of adjusting the temperature of the acid solution so that the gases are cooled to a temperature just below the dew point or the azeotrope point of the chemical compound to be condensed;
∘ of spraying the acid solution into the decontamination stage (**2**);
∘ of recovering the chemical compound condensed in the form of liquid phase condensates;
∘ of injecting the solution recovered into the shell of the decontamination stage.

2. Device (**1**) for extracting a chemical compound according to Claim 1, **characterized in that** it comprises a packing (**10**) located between the recovery plate (**11**) and the acid gas injection means (**9**).

3. Device (**1**) for extracting a chemical compound according to either one of the preceding claims, **characterized in that** the recovery tank (**13**) comprises a pH meter (**18**) that makes it possible to measure the acidity of the acid solution.

4. Device (**1**) for extracting a chemical compound according to any one of the preceding claims, **characterized in that** an electronic metering valve (**19**) is arranged in order to inject water into the recovery tank (**13**) when the acidity of the acid solution exceeds a predetermined threshold.

5. Device (**1**) for extracting a chemical compound according to Claim 4, **characterized in that** the program is designed to continuously measure the pH of the acid solution and to inject water into the acid solution when the acidity of the acid solution exceeds a predetermined threshold.

6. Device (**1**) for extracting a chemical compound according to any one of the preceding claims, **characterized in that** the recovery tank (**13**) comprises an outlet (17) for discharging the overflow.

7. Device (**1**) for extracting a chemical compound according to any one of the preceding claims, **characterized in that** the means (**23**) for measuring the temperature of the acid solution are positioned upstream of the means for injecting the acid solution relative to the direction of movement of the acid solution.

8. Device (**1**) for extracting a chemical compound according to any one of the preceding claims, **characterized in that** this device comprises a heat recycling circuit (**5**) in which a heat transfer fluid circulates, the heat recycling circuit (**5**) incorporating a heat exchanger (**21**) positioned inside the decontamination stage (**2**) or in the recovery tank (**13**), the heat recycling circuit (**5**) being arranged in order to heat a heat transfer fluid of an Organic Rankine Cycle in order to produce energy.

9. Process for extracting a chemical compound from an acid gas, of which the initial composition, the flow rate, and the partial pressure of the chemical elements are known, this process using the device according to any one of the preceding claims, this process comprising steps:
- of measuring the temperature of the gases at the inlet of the decontamination stage (**2**);
- of measuring the temperature of the acid solution to be sprayed;
- of adjusting the temperature of the acid solution so that the gases are cooled to a temperature just below the dew point or the azeotrope point of the chemical compound to be condensed;
- of spraying the acid solution into the decontamination stage (**2**) in order to cool the gases;
- of recovering the chemical compound condensed in the form of liquid phase condensates;
- of injecting the acid solution recovered into the shell (**3**) of the decontamination stage (**2**);
this process being repeated continuously in each decontamination stage (**2**) of the device (**1**).

10. Decontamination and heat recycling process according to Claim 9, **characterized in that** the pH of the acid solution is measured continuously and readjusted when the acidity exceeds a predetermined threshold.
